# FASCICULE DE BREVET EUROPEEN

(11) **EP 0 702 246 B1**
(45) Date de publication et mention de la délivrance du brevet: **19.11.1997**
(21) Numéro de dépôt: 95402062.4
(22) Date de dépôt: 12.09.1995
(51) Int. Cl.: G01S 7/481, G02B 26/10

(54) **Dispositif embarquable de mesure de rétrodiffusion de lumière**
Tragbares Gerät zum Messen der Rückstreuung von Licht
Portable device for measuring the backscattering of light

(30) Priorité: 13.09.1994 FR 9410905
(43) Date de publication de la demande: 20.03.1996
(73) Titulaire: MATRA MARCONI SPACE FRANCE, 75116 Paris (FR)
(72) Inventeur: Safa, Frédérick, F-31400 Toulouse (FR)
(74) Mandataire: Fort, Jacques

(56) Documents cités:
- DE-U- 9 010 222
- US-A- 4 340 299
- US-A- 5 071 239
- US-A- 5 255 065

## Description

La présente invention concerne les dispositifs embarquables sur véhicule aérien ou spatial, destinés à mesurer la rétrodiffusion de la lumière par une scène éloignée.

Elle concerne plus particulièrement les dispositifs de ce type, dits lidars, comprenant un laser d'émission d'impulsions de lumière courtes, une voie de réception du flux lumineux rétrodiffusé et des moyens optiques de balayage conique permettant d'orienter une direction commune d'émission du laser et de réception par ladite voie suivant des génératrices successives d'un cône.

L'invention trouve une application importante dans le domaine des lidars embarqués sur satellite et destinés à l'exploration météorologique de la terre. Ces lidars émettent une impulsion laser, de quelques nanosecondes à quelques microsecondes de longueur, à travers un télescope. L'onde rétrodiffusée par les particules d'aérosol de l'atmosphère permet de mesurer des paramètres tels que la concentration des aérosols ou la vitesse des vents. Comme les couches successives de l'atmosphère sont atteintes par l'impulsion laser à des instants différents, un découpage du signal de retour par des fenêtres temporelles permet de dresser une carte des paramètres à travers l'épaisseur d'atmosphère sondée.

Les lidars utilisés peuvent être incohérents : ils fournissent alors uniquement une information sur la variation de la densité d'aérosol en fonction de l'altitude et sur l'altitude des sommets des nuages, sauf si on détecte le décalage Doppler par une spectromètre tel qu'un Fabry-Pérot.

Plus souvent, on utilise des lidars cohérents, ou lidars Doppler, qui permettent de mesurer directement la vitesse des vents par effet Doppler et détection hétérodyne, l'onde rétrodiffusée subissant un décalage en fréquence proportionnel à la vitesse radiale relative de la cible. La vitesse du vent à une altitude donnée s'obtient alors en soustrayant, de la vitesse radiale relative mesurée, les contributions de la vitesse du porteur du dispositif et de la vitesse d'entraînement liée à la rotation de la terre.

Par une mesure Doppler, on obtient uniquement la projection de la vitesse sur la direction de visée de l'instrument. Un dispositif du genre ci-dessus destiné à des applications météorologiques est en conséquence avantageusement prévu pour mesurer au moins deux composantes de la vitesse, séparées d'environ 30°.

On a déjà proposé des dispositifs, montés sur satellite en orbite basse, du genre ci-dessus.

La ligne de visée d'un télescope émetteur fixe par rapport au satellite décrit une courbe sur la surface de la terre qui reproduit la trace du satellite. Pour obtenir une bonne couverture de la terre, il est nécessaire que le dispositif sonde l'atmosphère de part et d'autre de la trace du satellite au sol. Pour cela, on a jusqu'ici proposé soit de déplacer l'ensemble du télescope, soit d'adjoindre au télescope un dispositif de balayage situé devant lui, tel qu'un miroir plan, donnant un balayage conique, qui se traduit par un tracé de balayage au sol en forme de cycloïde.

Ces deux types de balayage connus ont des inconvénients graves du point de vue des contraintes mécaniques imposées à la plateforme du satellite. Si le télescope dans son entier est mobile, il génère des forces de réaction sur la plateforme, d'où des contraintes et la nécessité d'une compensation pour conserver un contrôle d'attitude du satellite. Si c'est un miroir ou prisme qui est déplaçable devant le satellite, il doit être de grande taille pour autoriser une ouverture importante.

Dans la pratique, cela interdit d'utiliser une commande pas-à-pas : le télescope ou le miroir sont mis en rotation permanente. Cela induit deux effets parasites. L'onde rétrodiffusée n'est pas récupérée dans la même direction que l'onde émise, ce qui crée un phénomène d'aberration angulaire ; comme l'impulsion met un temps fini à traverser l'épaisseur de l'atmosphère, la direction de l'onde de retour varie pendant la durée du signal de retour, ce qui se traduit par un bougé de l'image.

On a également proposé (US-A-5071239) un télescope à balayage conique comprenant un objectif d'entrée, un miroir en forme d'anneau d'ellipsoïde et un miroir, tournant de façon continue, situé sur l'axe du cône.

L'invention vise notamment à fournir un dispositif du type ci-dessus défini, répondant mieux que ceux antérieurement connus aux exigences de la pratique. Elle vise notamment à réduire la masse et les dimensions des pièces mobiles nécessaires pour effectuer le balayage conique.

Dans ce but, l'invention propose notamment un dispositif du genre ci-dessus défini, conforme à la revendication 1.

Les réflecteurs peuvent être notamment constitués par des fractions hors d'axe de paraboloïde qui focalisent chacune un faisceau de lumière parallèle provenant de la scène observée vers le miroir rotatif. Ces fractions de paraboloïde constituent ainsi tout à la fois des réflecteurs et les composants de télescope successifs.

Dans un autre mode de réalisation, les réflecteurs sont disposés entre une optique à lentilles de réduction de diamètre du faisceau d'entrée et de sortie du dispositif et ledit miroir rotatif. Cette optique à lentilles peut comporter un télescope unique proprement dit et, pour chacune des directions de visée successives, un élément optique correcteur qui peut être également prévu pour donner naissance à un faisceau de lumière parallèle, dirigé parallèlement à l'axe de rotation du miroir rotatif, de diamètre beaucoup plus faible que le diamètre du faisceau d'entrée et de sortie du dispositif.

Pour augmenter la couverture du satellite, il est possible de multiplier le nombre de traces au sol en associant plusieurs dispositifs du genre qui vient d'être définis, avec cependant un détecteur et un laser communs.

Les caractéristiques ci-dessus ainsi que d'autres apparaîtront mieux à la lecture de la description qui suit de modes particuliers de réalisation de l'invention, donnés à titre d'exemples non limitatifs. La description se réfère aux dessins qui l'accompagnent, dans lesquels :
- la figure 1 est un schéma de principe, destiné à faire apparaître des caractéristiques essentielles de l'invention ;
- la figure 2 montre, en tirets, l'allure du champ annulaire exploré dans le plan focal du télescope du dispositif de la figure 1 ;
- la figure 3, similaire à la figure 1, montre une constitution possible du dispositif dans le cas d'utilisation d'un télescope à lentilles ;
- la figure 4 montre une formule optique particulière utilisable dans le dispositif de la figure 3 ;
- la figure 5, similaire à la figure 3, montre la constitution générale d'un dispositif utilisant un télescope à miroir ;
- la figure 6 montre un dispositif comportant plusieurs télescopes, qui peuvent être chacun du genre montré en figure 1, 2 ou 5 ;
- la figure 7 montre une disposition possible du champ d'exploration de trois télescopes, suivant le montage de la figure 6 ; et
- la figure 8, similaire à la figure 1, montre une autre variante encore de réalisation.

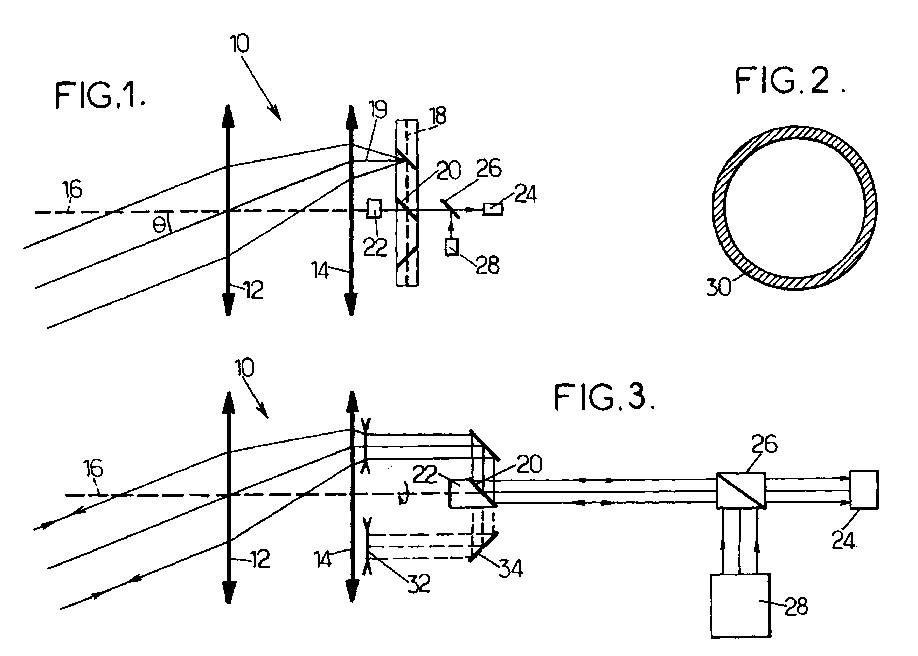

Le principe mis en oeuvre par l'invention est schématisé sur les figures 1 et 2. Le dispositif comporte un télescope 10, dioptrique dans le cas de la figure 1, constitué par une lentille d'entrée 12 et une lentille de champ 14. Ces lentilles sont calculées de façon qu'un faisceau parallèle incident suivant une direction d'angle d'incidence θ par rapport à l'axe 16 du télescope (cet axe 16 étant orienté vers le nadir lors de l'emploi sur satellite) donne naissance à un faisceau convergeant vers un plan focal 18, d'axe 19 parallèle à l'axe optique du télescope 16 qui constitue l'axe de balayage. Des moyens de balayage optique comportent un miroir 20 placé sur l'axe 16, ayant une dimension beaucoup plus faible que celle du faisceau d'entrée recueilli par la lentille 12. Un moteur pas-à-pas 22 permet de faire tourner le miroir 20 autour de l'axe 16.

Pour chaque position du miroir, c'est une fraction angulaire particulière de l'image annulaire 30 (figure 2) formée dans le plan focal et correspondant aux objets fournissant un faisceau arrivant sous l'incidence θ qui est renvoyée vers un détecteur 24. Un miroir de renvoi 25 correspond à chaque position possible du miroir 20. Un séparateur 26, représenté sur la figure 1 sous forme d'une lame semi-transparente, permet d'envoyer le faisceau fourni par un laser à impulsions 28 suivant un trajet de sortie coïncidant avec le trajet du faisceau d'entrée recueilli par le détecteur 24.

Du fait de la faible inertie du miroir 20, il est possible de le faire avancer pas-à-pas, en le maintenant dans la même position pendant l'émission et jusqu'à la réception complète de l'écho de retour. On élimine ainsi les aberrations angulaires que provoquerait un balayage à vitesse angulaire constante. Le mouvement de translation du satellite n'induit en effet pas d'aberrations angulaires, du fait de la composition des vitesses. De plus, le mode de fonctionnement pas-à-pas permet de s'affranchir des microvibrations provenant d'un mécanisme de balayage continu.

Il est relativement facile de réaliser un télescope à lentilles donnant une image satisfaisante dans une zone annulaire du plan focal, telle que la zone 30 de la figure 2, éventuellement en plaçant un élément correcteur sur chaque trajet entre la lentille 40 et le séparateur. Il n'y a pas d'aberration chromatique, car l'onde émise par le laser 28 est pratiquement monochromatique. Le champ radial nécessaire est étroit, généralement de l'ordre du dixième de degré.

La figure 3 montre une constitution possible du dispositif dont le schéma de principe est donné en figure 1. A chaque position angulaire d'arrêt du miroir 20 correspond un sous-ensemble optique comprenant une lentille divergente 32 fournissant un faisceau de sortie parallèle à l'axe 16 et un miroir 34 de renvoi vers le miroir rotatif 20. La lentille 32 peut être asphérique et constituer un élément correcteur. Elle peut aussi être remplacée ou complétée par un élément correcteur tel qu'une lame à faces parallèles asphériques ou un élément holographique. Le séparateur 26 peut être constitué par un commutateur électro-optique.

Le diamètre d'ouverture d'entrée d'un tel dispositif n'est limité que par le diamètre qu'il est possible de donner aux lentilles 12 et 14. Dans le cas d'un dispositif destiné à fonctionner dans l'infrarouge, comportant donc des lentilles en germanium, on peut difficilement dépasser un diamètre de 50 cm. Le télescope permet de réduire le diamètre du faisceau d'entrée par un facteur de 10 environ, dans un encombrement acceptable.

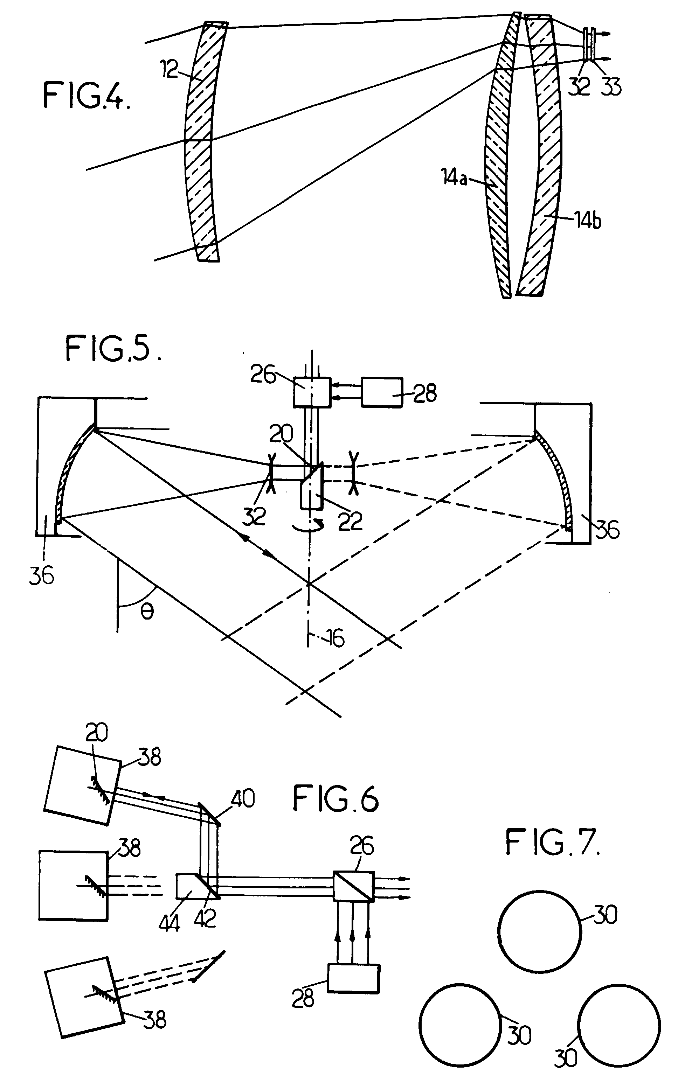

Pour une meilleure correction des aberrations, le télescope peut avoir la constitution montrée en figure 4, avec des lentilles en germanium. La lentille unique 14 de la figure 2 est remplacée par deux lentilles à surfaces sphériques 14a et 14b. Le télescope présente une longueur focale de 540 mm, optimisée pour θ = 20°, avec un diamètre d'entrée de 400 mm sous cette incidence.

L'élément correcteur montré en figure 4 comporte une lentille divergente 32 donnant naissance à un faisceau parallèle et une lame asphérique 33 qui sert à compenser les aberrations résiduelles.

On ne décrira ni le laser 28, ni le détecteur 24 qui peuvent avoir l'une des constitutions connues. Dans le cas d'un laser Doppler, la mesure de vitesse s'effectuera généralement par détection hétérodyne sur le signal fourni par le détecteur 24.

Dans la pratique, un télescope à lentilles tel que celui de la figure 3 ne permet pas d'aller au-delà d'un angle de balayage θ de 45° environ et d'un diamètre d'entrée de 50 cm environ, en infrarouge. Lorsqu'on recherche des angles de balayage et/ou des diamètres d'entrée importants, on peut utiliser un télescope à miroirs répartis angulairement.

La figure 5 (où les éléments correspondant à ceux de la figure 3 portent le même numéro de référence) montre la constitution de principe d'un tel dispositif. Le télescope comporte plusieurs fractions, matérialisées chacune par un miroir parabolique ou pseudo-parabolique 36, hors d'axe. Le nombre de fractions correspond au nombre de positions successives données au miroir de balayage 20 (habituellement de 4 à 20). Les directions successives d'émission et de réception sont toutes localisées sur un cône dont l'angle au sommet est défini par les caractéristiques des miroirs paraboliques 36. Un élément correcteur 32 est encore interposé sur chaque trajet optique, entre le miroir tournant 20 et le miroir parabolique respectif 36.

Le dispositif montré en figure 5, comme celui de la figure 3, permet sans difficulté de réduire le diamètre du faisceau d'entrée-sortie dans un rapport de 10 environ. Il présente l'avantage d'autoriser l'obtention d'un cône de balayage de demi-angle au sommet θ élevé, pouvant aisément dépasser 45°. De plus, le diamètre du faisceau émis ou reçu peut facilement dépasser un mètre.

Les figures 6 et 7 montrent un système comportant plusieurs dispositifs 38 (trois par exemple) pouvant avoir l'une des constitutions précédemment décrites, si ce n'est qu'ils comportent un laser 28 et un détecteur commun. Les trois dispositifs ont des orientations différentes, pour que les traces au sol du faisceau, à supposer le satellite fixe, présentent une disposition relative décalée, comme celle montrée en figure 7. Les dispositifs 38 sont utilisés successivement en orientant les faisceaux provenant de leurs miroirs tournants de sortie 20 vers le commutateur 26, par l'intermédiaire d'un miroir de renvoi respectif supplémentaire 40 et d'un miroir tournant à quelques positions 42 commandé par un moteur pas-à-pas 44.

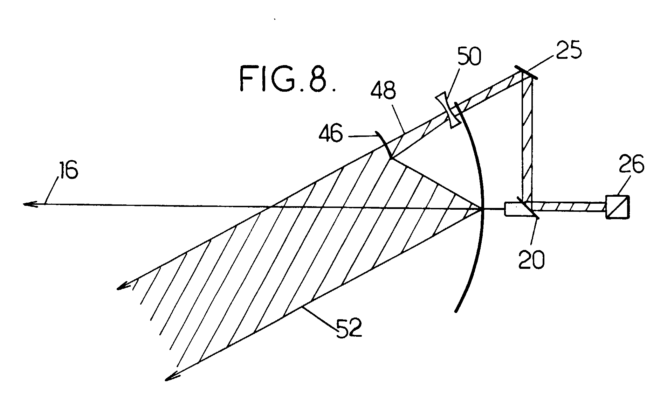

Pour certaines applications, et notamment sur les satellites, où la puissance électrique est limitée à environ 1 kW du fait de la dimension des panneaux solaires et où la puissance du laser est elle aussi limitée, il est souhaitable que le faisceau de réception ait une largeur au moins équivalente à un cercle de 0,5 m de diamètre. Le mode de réalisation montré en figure 8 permet d'atteindre ce résultat avec un encombrement limité, une masse réduite et des éléments relativement faciles à réaliser.

Le dispositif montré en figure 8, où les éléments correspondant à ceux de la figure 1, sont désignés par les mêmes numéros de référence, autorise un balayage autour de l'axe 16. Il comporte un miroir sphérique 36, dont le centre de courbure C est placé sur l'axe 16. A chaque orientation que peut prendre le miroir de balayage 20 correspond un trajet optique sur lequel sont placés un miroir asphérique de révolution 46, dont l'axe de révolution 48 passe par le point C et constitue une génératrice du cône de balayage, une lentille correctrice 50 de révolution, également d'axe 48, et un élément déviateur 25 qui peut être un miroir plan ou un prisme.

La puissance optique et l'ouverture de chaque ensemble miroir asphérique 46 - lentille 50 sont telles qu'il reçoit un faisceau compris entre la génératrice 48 du cône de balayage 8 et le rayon 52. Le miroir 36 est échancré sur chaque chemin optique pour contourner le passage de la lumière.

Le miroir primaire 36 étant sphérique, sa réalisation est facile. Il peut avoir une grande ouverture de l'ordre de F/0,5, ce qui réduit l'encombrement du télescope. Le miroir 46 et la lentille 50 sont de révolution, de sorte qu'ils peuvent être réalisés sans difficultés par usinage au diamant. L'asphérisation du système 46 - 50 est calculée de manière à obtenir un système stigmatique pour la direction et à satisfaire la condition d'aplanétisme autour de la direction 48. Comme le lidar fonctionne en mode pas-à-pas et que les pièces optiques sont fixes pendant l'émission et la réception de l'impulsion laser, le champ requis est pratiquement nul. Dans la pratique, l'existence d'un champ non nul, où le télescope est limité par la diffraction, est utile d'une part pour l'alignement du télescope au sol et d'autre part pour prendre en compte les défauts d'alignements des optiques en vol.

Un dispositif effectivement réalisé comprend un miroir 36 de 1,4 m de diamètre et huit à douze ensembles 46 - 50 - 25 régulièrement répartis autour de l'axe 16. Chaque ensemble correspond à une génératrice 48 et à une position angulaire du miroir de balayage 20.

Un tel dispositif pour un lidar utilisant un laser à CO₂ à 9,11 µm de laongueur dénote les caractéristiques suivantes :
- Pupille d'entrée (diamètre du faisceau) : 700 mm
- Diamètre du miroir 36 : 1.420 mm
- Nombre de sous-ensembles (46, 50, 25) : 8
- Angle au sommet du cône de balayage : 60 degrés
- Champ utlisable au voisinage de 48 (erreur < λ / 14 rms) : +/-300 µrad autour de 48.

## Revendications

1. Dispositif embarquable sur véhicule aérien ou spatial comprenant un laser (28) d'émission d'impulsions de lumière courtes, une voie de réception du flux lumineux rétrodiffusé et des moyens optiques de balayage conique permettant d'orienter une direction commune d'émission du laser et de réception par ladite voie suivant des génératrices successives d'un cône,
caractérisé en ce que lesdits moyens optiques comprennent un miroir (20) rotatif pas-à-pas autour d'un axe de balayage (16) de renvoi d'un chemin optique commun à un détecteur de réception (24) et au laser (28) vers des directions successives réparties à intervalles angulaires réguliers égaux au pas autour de l'axe de balayage (16) et plusieurs réflecteurs fixes (25;34;36) répartis auxdits intervalles, successivement associés au chemin optique commun par le miroir rotatif, lesdits réflecteurs fixes (25;34;36) étant prévus pour correspondre à des orientations de sondage différentes suivant ledit cône et ledit miroir rotatif (20) ayant une taille très inférieure à celle du faisceau d'entrée et de sortie du dispositif.

2. Dispositif selon la revendication 1, caractérisé en ce que lesdits réflecteurs sont constitués par des fractions hors d'axe (36) de paraboloïde, focalisant un faisceau parallèle provenant de la scène observée vers le miroir rotatif (20) et constituant télescope.

3. Dispositif selon la revendication 1, caractérisé en ce que lesdits réflecteurs sont disposés chacun entre une optique à lentilles (12,14) de réduction de diamètre du faisceau d'entrée et de sortie du dispositif et ledit miroir rotatif (20).

4. Dispositif selon la revendication 3, caractérisé en ce que ladite optique à lentilles comporte un télescope proprement dit et, pour chacune des directions de visée successives, un élément optique correcteur (32).

5. Dispositif selon la revendication 4, caractérisé en ce que l'élément correcteur est également prévu pour donner naissance à un faisceau de lumière parallèle, dirigé parallèlement à l'axe de rotation du miroir rotatif, de diamètre beaucoup plus faible que le diamètre du faisceau d'entrée et de sortie du dispositif.

6. Dispositif selon la revendication 4 ou 5, caractérisé en ce que l'élément correcteur est une lame à faces parallèles asphériques ou un élément holographique.

7. Dispositif selon l'une quelconque des revendications précédentes, caractérisé en ce que lesdits moyens optiques sont prévus pour réduire le diamètre du faisceau d'entrée-sortie dans un rapport de 10 environ.

8. Dispositif selon l'une quelconque des revendications précédentes, caractérisé en ce que le miroir rotatif est entraîné par un moteur pas-à-pas.

9. Dispositif selon l'une quelconque des revendications précédentes, monté sur satellite de façon que l'axe de balayage soit orienté vers le nadir du satellite.

10. Dispositif selon la revendication 1, caractérisé en ce que lesdits réflecteurs sont constitués par des miroirs plans (25) et disposés chacun sur un chemin optique entre :
une optique de réduction de diamètre du faisceau d'entrée ayant un miroir sphérique (36) commun à toutes les voies, un miroir asphérique de correction (46) et une lentille asphérique (50), et
ledit miroir rotatif (20).

11. Système monté sur satellite, comportant plusieurs dispositifs selon l'une quelconque des revendications 1 à 10, ayant des orientations différentes, pour que les traces au sol de leurs faisceaux d'entrée-sortie présentent une disposition relative décalée, les dispositifs (38) étant utilisés successivement en orientant les faisceaux provenant de leurs miroirs tournants de sortie (20) vers un commutateur (26) alimentant un laser et un détecteur commun par l'intermédiaire d'un miroir de renvoi respectif supplémentaire (40) et d'un miroir tournant à quelques positions (42) commandé par un moteur pas-à-pas (44).

## Patentansprüche

1. Vorrichtung zum Einsatz auf einem Luftfahrzeug oder Raumfahrzeug, aufweisend einen Laser (28) zur Emission von kurzen Lichtimpulsen, einem Empfangsstrahl aus rückgestreuten Licht und optische Mittel für kegelförmige Abtastung, die die Ausrichtung einer gemeinsamen Richtung der Laseremission und des Empfangs über den genannten Strahl gemäß den aufeinanderfolgenden Mantellinien eines Konus ermöglichen, **dadurch gekennzeichnet, daß** die optischen Mittel einen Spiegel (20) aufweisen, der schrittweise um eine Abtastachse (16) zur Steuerung eines optischen Weges drehbar ist,, der einem Empfangsdetektor (24) und dem Laser (28) in Richtung der aufeinanderfolgenden Richtungen gemeinsam ist, die auf regelmäßige im Schritt gleiche Winkelintervalle um die Abtastachse (16) verteilt sind, und mehrere feste Reflektoren (25; 34; 36), die auf die Intervalle verteilt sind und dem gemeinsamen optischen Strahl durch den drehbaren Spiegel sukzessive zugeordnet sind, wobei die festen Reflektoren (25; 34; 36) vorgesehen sind, um unterschiedlichen Sondierungsrichtungen gemäß dem Konus und dem drehbaren Spiegel (20) zu entsprechen, der eine viel geringere Abmessung als die des Eingangs- und Ausgangsstrahls der Vorrichtung hat.

2. Vorrichtung gemäß Anspruch 1, **dadurch gekennzeichnet, daß** die Reflektoren gebildet sind durch Außerachsen-Fraktionen (36) von Paraboloiden, die einen parallelen Strahl, der von der beobachteten Szene stammt, gegen den drehbaren Spiegel (20) bündeln beziehungsweise fokusieren und ein Teleskop bilden.

3. Vorrichtung gemäß Anspruch 1, **dadurch gekennzeichnet, daß** die Reflektoren jeweils angeordnet sind zwischen einer Linsenoptik (12, 14) zur Reduktion des Durchmessers des Strahls am Eingang und Ausgang der Vorrichtung und des drehbaren Spiegels (20).

4. Vorrichtung gemäß Anspruch 3, **dadurch gekennzeichnet, daß** die Linsenoptik genau gesagt ein Teleskop und für jede der Richtungen der aufeinanderfolgenden Beobachtungen ein optisches Korrekturelement (32) aufweist.

5. Vorrichtung gemäß Anspruch 4, **dadurch gekennzeichnet, daß** das Korrekturelement in gleicher Weise vorgesehen ist, um einen parallelen Lichtstrahl zu erzeugen, der parallel zur Rotationsachse des drehbaren Spiegels gerichtet ist und einen sehr viel kleinerem Durchmesser als der Durchmesser des Eingangs- und Ausgangsstrahls der Vorrichtung hat.

6. Vorrichtung gemäß Anspruch 4 oder 5, **dadurch gekennzeichnet, daß** das Korrekturelement ein Blatt mit parallelen asphärischen Flächen oder ein holographisches Element ist.

7. Vorrichtung gemäß einem der vorhergehenden Ansprüche, **dadurch gekennzeichnet, daß** die optischen Vorrichtungen vorgesehen sind, um den Durchmesser des Eingangs-/Ausgangsstrahls in einem Verhältnis von etwa 10 zu verkleinern.

8. Vorrichtung gemäß einem der vorhergehenden Ansprüche, **dadurch gekennzeichnet, daß** der drehbare Spiegel durch einen Schrittmotor gesteuert ist.

9. Vorrichtung gemäß einem der vorhergehenden Ansprüche, montiert auf einem Satelliten derart, daß die Abtastachse zum Fußpunkt des Satelliten ausgerichtet ist.

10. Vorrichtung gemäß Anspruch 1, **dadurch gekennzeichnet, daß** die Reflektoren durch flache Spiegel (25) gebildet und jeweils auf einem optischen Weg zwischen:
einer Optik zur Verminderung des Durchmessers des Eingangsstrahls, die einen sphärischen Spiegel (36), der allen Strahlen gemeinsam ist, einen asphärischen Korrekturspiegel (46) und eine asphärische Linse (50) aufweist, und
dem drehbaren Spiegel (20) angeordnet sind.

11. Auf einem Satelliten montiertes System, das mehrere Vorrichtungen gemäß einem der Ansprüche 1 bis 10 aufweist, die unterschiedliche Orientierungen haben, damit die Bodenlinien ihrer Eingangs-/Ausgangsstrahlen eine relativ zueinander versetzte Anordnung bilden, wobei die Vorrichtungen (38) nacheinander eingesetzt werden, um die Strahlen, die von den drehbaren Ausgangsspiegeln (20) stammen, gegen einen Kommutator (26) zu richten, welcher einen Laser und einen gemeinsamen Detektor unter Zwischenschaltung eines jeweiligen ergänzenden Steuerspiegels (40) und eines Spiegels versorgt, der gesteuert durch einen Schrittmotor (44) um gewisse Positionen (42), drehbar ist.

## Claims

1. Device suitable for use on an aircraft or space vehicle, comprising a laser (28) for transmitting short light pulses, a channel for receiving a backscattered light flux and optical conical scanning means enabling to angularly locate a common direction for laser transmission and reception by said channel along successive generatrices of a cone,
characterized in that said optical means comprise a mirror (20) which is rotatable stepwise about a scanning axis (16), said mirror for diverting an optical path which is common to a receiving detector (24) and to the laser (28) toward successive directions distributed at equal angular intervals, equal to said step, about the scanning axis (16) and a plurality of stationary reflectors (25;34;36) distributed at said intervals, successively associated to the common optical path by the rotating mirror, said stationary reflectors (25;34;36) being arranged for corresponding to different angular scanning positions, along said cone, and said rotating mirror (20) having a size which is much lower than the size of the input and output beam of the device.

2. Device according to claim 1, characterized in that said reflectors are constituted by off axis sections (36) of a paraboloid, focusing a parallel beam originating from the observed scene toward the rotating mirror (20) and constituting a telescope.

3. Device according to claim 1, characterized in that said reflectors are each located between an optical lens system (12,14) for reducing the diameter of the input-output beam of the device and said rotating mirror (20).

4. Device according to claim 3, characterized in that said optical lens system includes a telescope properly speaking and, for each of successive aiming directions, a corrective optical element (32).

5. Device according to claim 4, characterized in that the correcting element is also arranged for generating a parallel light beam directed parallel to the axis of rotation of the rotating mirror, having a diameter much lesser than the diameter of the input-ouptput beam of the device.

6. Device according to claim 4 or 5, characterized in that the correcting element is a plate having aspherical parallel surfaces or a holographic element.

7. Device according to any one of the preceding claims, characterized in that said optical means are arranged to reduce the diameter of the input-output beam in a ratio of approximately 10/1.

8. Device according to any one of the preceding claims, characterized in that the rotating mirror is driven by a step by step motor.

9. Device according to anyone of the preceding claims, carried on a satellite for the scanning axis to be directed toward the nadir direction of the satellite.

10. Device according to claim 1, characterized in that said reflectors are flat mirrors (25) and are each located on an optical path between:
an optical system for reducing the diameter of the input beam, having a spherical mirror (36) which is common to all channels, a correcting aspherical mirror (46) and an aspherical lens (50), and
said rotating mirror (20)

11. System carried on a satellite, comprising a plurality of device according to any one of claims 1-10, having different angular directions for the footsteps on ground of their input-output beams to be mutually offset, the devices (38) being successively used by angularly directing the beams originating from their rotating output mirrors (20) toward a switching unit (26) which drives a laser and a detector which are common through an additional respective light bending mirror (40) and a rotating mirror (42) having only some positions, driven by a step by step motor (44).
